# EUROPEAN PATENT APPLICATION

(11) **EP 4 625 542 A1**
(43) Date of publication of application: **01.10.2025**
(21) Application number: 23910139.7
(22) Date of filing: 13.12.2023
(51) Int. Cl.: H01M 4/525, H01M 4/505

(54) **TERNARY POLYCRYSTALLINE POSITIVE ELECTRODE MATERIAL AND PREPARATION METHOD THEREFOR**

(30) Priority: 27.12.2022 CN 202211713175
(71) Applicant: BASF Shanshan Battery Materials Co., Ltd., Changsha, Hunan 410205 (CN)
(72) Inventor: CHEN, Xi, Changsha, Hunan 410205 (CN); SHE, Jiaxin, Changsha, Hunan 410205 (CN); WANG, Meng, Changsha, Hunan 410205 (CN); LUO, Gui, Changsha, Hunan 410205 (CN); TAN, Xinxin, Changsha, Hunan 410205 (CN)
(74) Representative: Finetti, Claudia
(86) International application number: PCT/CN2023/138381
(87) International publication number: WO 2024/140209

(57) **Abstract**

The present application relates to a ternary polycrystalline positive electrode material and a preparation method thereof. The positive electrode material is represented by a chemical formula LiₐNi_{b}Co_{c}M1_{d}M2ₑM3_{f}O_{g}. The preparation method includes following steps: (1) dissolving an element M3-containing compound to obtain an M3 solution, evenly mixing a ternary precursor material containing Ni, Co, and M1 with the M3 solution at a solid-to-liquid ratio of 1:(0.2 to 0.3) to form a slurry, and drying the slurry to obtain a modified ternary precursor material; (2) mixing the modified ternary precursor material with a lithium source and sintering to obtain an intermediate product; and (3) washing the intermediate product, then mixing with a coating agent, and sintering to obtain the ternary polycrystalline positive electrode material. The ternary polycrystalline positive electrode material has relatively small and uniformly distributed surface primary particles, which can alleviate stress concentration and crack formation caused by volume expansion of grains, thereby improving the stability and cycling efficiency of the positive electrode material. The preparation process is simple and suitable for large-scale industrial production.

## Description

### TECHNICAL FIELD

The present application relates to the field of lithium-ion battery technology, particularly to a ternary polycrystalline positive electrode material and a preparation method thereof.

### BACKGROUND

Currently, the entire society is facing global warming and oil crisis, leading to the rapid development of new energy vehicles. The energy storage technology for new energy vehicles has been a focus for both academia and industry. Lithium-ion batteries have broad prospects in the energy storage field for new energy vehicles due to their advantages such as low self-discharge, high output voltage and environmental friendliness. Consequently, it is particularly urgent to develop lithium-ion batteries with higher energy density and longer cycle life. Positive electrode materials, especially ternary materials, have attracted widespread attentions due to their high capacity and low costs.

However, for a high-nickel ternary positive electrode material, the higher the nickel content, the less stable the material structure becomes during cycling. Internal microcracks may propagate to the surfaces of the particles, forming new interfaces. The electrolyte can infiltrate into these cracks and react with the material, consuming more active material and accelerating the deterioration of the sub-microstructure of the material, eventually leading to particle pulverization and reduced cycling performance. At present, common methods for improving the cycling stability of the material include doping with metal elements and surface coating. The former can enhance the bond energy of metal-oxygen bonds, reduce the degree of lithium-nickel mixing, and mitigate the oxygen loss within the bulk phase, thereby improving the cycling performance of the material. The latter, the surface coating, involves forming a coating on the surface of the material, reducing side reactions between the material surface and the electrolyte. In addition to the above two approaches, another reliable approach is to refine surface primary particles to improve the structural stability of the positive electrode material.

Several Chinese patents have reported that doping with boron can refine primary particles and thereby improve cycling performance. However, in the existing technical solutions, the addition of boron may significantly increase the content of residual lithium in the positive electrode material, which adversely affects the cycling performance of the positive electrode material. Meanwhile, in the existing technical solutions, boron doping may cause an uneven distribution of the primary particles of the positive electrode material located at the surface of the material, further affecting the electrochemical performance of the positive electrode material.

### SUMMARY

The present application provides a ternary polycrystalline positive electrode material and a preparation method thereof, aiming to address the unsatisfactory electrochemical performance of the positive electrode material caused by high residual lithium content and poor uniformity in the distribution of the surface primary particles in the existing boron-doped positive electrode material.

To address the above technical issue, the present application adopts the following technical solutions:

A ternary polycrystalline positive electrode material is represented by a chemical formula LiₐNi_{b}Co_{c}M1_{d}M2ₑM3_{f}O_{g}, wherein M1 includes at least one element selected from the group consisting of Mn and Al, M2 includes at least one element selected from the group consisting of B, Zr, Sr, W, Nb, Ti, Mo, Ce, and Mg, M3 includes at least one element selected from the group consisting of F, S, and Cl; 0.97≤a≤1.10, 0.300≤b≤0.995, 0.005≤c≤0.300, 0.005≤d≤0.300, 0≤e≤0.030, 0.0001≤f≤0.300, and 1.800≤g≤2.200.

The present technical solution involves doping the ternary positive electrode material with element M3 to influence the formation energy of the primary particles of the ternary positive electrode material, adjusting the particle size of the primary particles during formation and ensuring uniform distribution of the primary particles. As a result, the median particle size D50 of equivalent diameter distribution of the ternary material primary particles located at the surface of the ternary material is maintained at a relatively low level. The relatively dense surface structure can reduce the generation of microcracks caused by volume expansion and contraction during charge-discharge cycles, and can decrease side reactions, thereby improving stability of the material. Consequently, the positive electrode material can achieve a relatively high initial coulombic efficiency, leading to improved discharge capacity and superior cycling stability.

Preferably, the median particle size D50 of equivalent diameter distribution of the surface primary particles of the ternary polycrystalline positive electrode material is in a range from 0.29 µm to 0.45 µm.

The equivalent diameter of the surface primary particles of the ternary polycrystalline positive electrode material is determined as follows: Scanning electron microscopic (SEM) images are taken using an ETD type probe in secondary electron imaging mode with a spot size of 3.0, at an electron beam acceleration voltage of 5.00 kV and a magnification of 30,000x. The diameter of a circle with an equivalent area of the surface primary particle, i.e., the diameter of the primary particle, is calculated by identifying the contour of a primary particle with a completely exposed surface in the 30,000x SEM image and converting the area enclosed by the identified contour into the area of an equivalent circle. The diameter of this equivalent circle is considered as the diameter of the primary particle. Through statistical analysis of the sample, the median particle size D50, as well as the D90 and D10 particle sizes, of the equivalent diameter distribution of the surface primary particles are obtained. Furthermore, a span of particle size distribution of the surface primary particles is calculated by span=(D90-D10)/D50.

Preferably, a grain size of the ternary polycrystalline positive electrode material is in a range from 120 nm to 350 nm. When the grain size is less than this range, the material is not fully grown, resulting in ineffective capacity utilization. When the grain size is greater than this range, the primary particles grow larger, making the polycrystalline material prone to cracking during cycling, leading to reduced cycling performance.

Preferably, the span of particle size distribution of the surface primary particles of the ternary polycrystalline positive electrode material is in a range from 0.76 to 0.96. By controlling the particle size of the primary particles of the positive electrode material, the present application achieves an improvement in the electrochemical performance of the material while obtaining a relatively low and appropriate span of particle size distribution. As a result, the surface primary particles exhibit a more concentrated particle size distribution, alleviating the excessive local stress during the charge and discharge processes. The stress distribution during the charge and discharge processes is more uniform, reducing the generation of microcracks, thereby enhancing the stability and cycling performance of the material. Additionally, an excessively low span is avoided, reducing the difficulty in span regulation. The relatively low span leads to a more concentrated particle size distribution and more uniform stress distribution during the charge and discharge processes, thereby improving cycling performance, whereas an excessively low span is difficult to achieve.

Preferably, the ternary polycrystalline positive electrode material is coated with a coating layer, wherein the coating layer includes at least one of aluminum oxide, boron oxide, zirconium oxide, strontium oxide, or tungsten oxide.

Preferably, a ratio of a total molar amount of nickel, cobalt, manganese, M1, M2, M3, and sulfur elements in the ternary polycrystalline positive electrode material to a molar amount of a coating element in the coating layer is 1:(0.001 to 0.020).

Based on the same technical concept, the present application further provides a method for preparing the ternary polycrystalline positive electrode material as described above, including the following steps:
(1) dissolving an element M3-containing compound to obtain an M3 solution, evenly mixing a ternary precursor material containing Ni, Co, and M1 with the M3 solution at a solid-to-liquid ratio of 1:(0.2 to 0.3) to form a slurry, and drying the slurry to obtain a modified ternary precursor material;
(2) mixing the modified ternary precursor material with a lithium source and sintering to obtain an intermediate product; and
(3) washing the intermediate product, then mixing with a coating agent, and sintering to obtain the ternary polycrystalline positive electrode material.

The design concept of this technical solution lies in uniformly coating the surface of the precursor material with element M3 by mixing the element M3-containing compound with the precursor material, allowing the element M3 on the surface of the precursor material to uniformly infiltrate into the precursor material during sintering. In addition, due to the influence of element M3 on the formation energy of individual primary particles during the sintering process, the primary particles can be refined and the uniform distribution thereof can be achieved.

Preferably, the coating agent is an element M2-containing compound.

Preferably, the sintering in step (2) is conducted at a temperature in a range from 650 °C to 800 °C for a time period in a range from 8 hours to 12 hours.

Preferably, the washing in step (3) is performed at a solid-to-liquid ratio of (1 to 5):1, at a temperature in a range from 4 °C to 40 °C for a time period in a range from 1 minute to 30 minutes.

Preferably, the sintering in step (3) is conducted at a temperature in a range from 240 °C to 440 °C for a time period in a range from 3 hours to 14 hours.

Preferably, the lithium source includes at least one of lithium carbonate, lithium hydroxide, or lithium oxide;
the element M3-containing compound includes at least one of lithium sulfate, zirconium sulfate, cerium sulfate, strontium sulfate, aluminum sulfate, cobalt sulfate, nickel sulfate, manganese sulfate, magnesium sulfate, cobaltous sulfate, calcium sulfate, or barium sulfate.

Compared with the prior art, the present application has the following advantages:
(1) In the ternary polycrystalline positive electrode material of the present application, the element doping allows the positive electrode material to have relatively small surface primary particles with uniform and orderly distribution. The median particle size D50 of equivalent diameter distribution of the surface primary particles can be in a range from 0.29 µm to 0.45 µm, and the span of particle size distribution can be in a range from 0.76 to 0.96, which effectively alleviate stress concentration and crack generation caused by volume expansion of grains during cycling, reducing the occurrence of side reactions between the electrolyte and particle cracks, thereby improving the stability and cycling efficiency of the positive electrode material. Additionally, the doping of element M3 does not increase the residual lithium content in the positive electrode material, avoiding adverse effects on the cycling performance of the positive electrode material.
(2) The preparation method of the ternary polycrystalline positive electrode material of the present application ensures uniform elemental coating on the surface of the precursor material. Thus, during sintering, element M3 can uniformly influence the formation energy of individual primary particles, thereby obtaining refined primary particles with a uniform distribution. The preparation process is simple and suitable for large-scale industrial production.

### BRIEF DESCRIPTION OF THE DRAWINGS

FIG. 1 shows a field emission scanning electron microscopic (FE-SEM) image of a ternary polycrystalline positive electrode material in Example 1.
FIG. 2 shows an image recognition effect of surface primary particles in the FE-SEM image of the ternary polycrystalline positive electrode material in Example 1.
FIG. 3 shows a graph of initial charge-discharge curves of Examples 1 to 3 and Comparative Examples 1 to 3.
FIG. 4 shows a graph of charge-discharge cycling performance of Examples 1 to 3 and Comparative Examples 1 to 3.
FIG. 5 shows a graph of direct current internal resistance (DCR) growth curves of Examples 1 to 3 and Comparative Examples 1 to 3 during charge-discharge cycling.

### DETAILED DESCRIPTION

The present application is further described in detail in conjunction with specific embodiments.

### Example 1

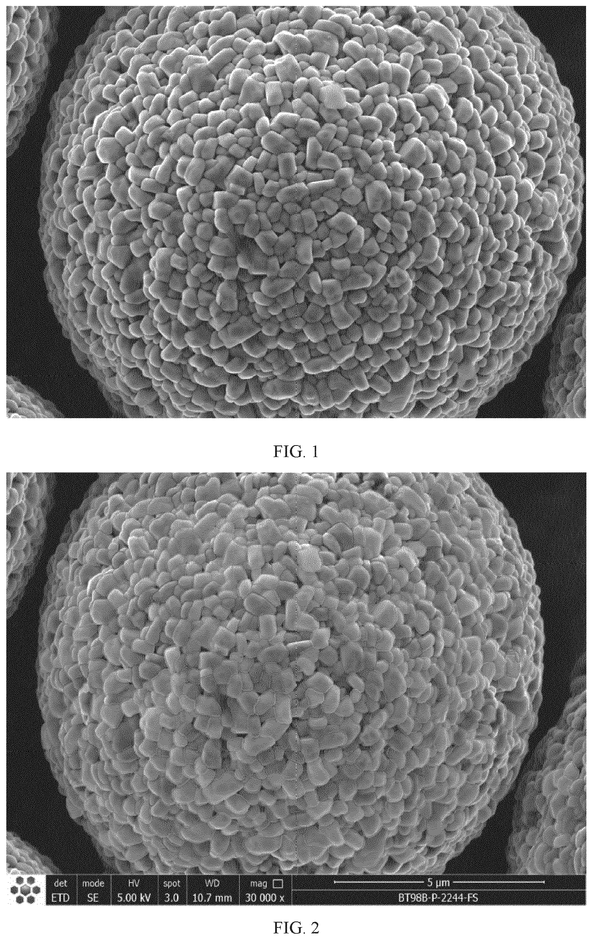

The ternary polycrystalline positive electrode material in this example is represented by a chemical formula Li_{1.04}Ni_{0.874}Co_{0.055}Mno_{0.045}Zr_{0.006}S_{0.012}B_{0.01}O_{2.018}. The median particle size D50 of equivalent diameter distribution of its surface primary particles is 0.381 µm, the span of particle size distribution of the surface primary particles is 0.916, and the grain size of the ternary polycrystalline positive electrode material is 214 nm. The FE-SEM image of the ternary polycrystalline positive electrode material in this example is shown in FIG. 1, and the image recognition effect of the surface primary particles of the positive electrode material is shown in FIG. 2. The result in FIG. 2 demonstrates good recognition effect, as the contour of each surface primary particle can be accurately identified through image recognition.

The ternary polycrystalline positive electrode material in this example was prepared by a method including the following steps:
(1) 0.006 mol of zirconium sulfate was added to a solvent and dispersed by stirring. 1 mol of a ternary precursor material (i.e., a nickel-cobalt-manganese hydroxide, where Ni:Co:Mn=90:5.5:4.5) was then added at a solid-to-liquid ratio (in unit of g/mL) of 1:0.25, and stirred for 10 minutes (min) to obtain a slurry. The slurry was transferred into an oven and dried at 120 °C for 16 hours (h) to remove the solvent, yielding a modified precursor material.
(2) The modified precursor material and lithium hydroxide were mixed at an elemental molar ratio of 1:1.04 by using a dry mixing method, sintered at 770 °C for 11 h in a pure oxygen atmosphere after evenly mixed, and then cooled and sieved to obtain a ternary polycrystalline positive electrode material represented by a chemical formula Li_{1.04}Ni_{0.884}Co_{0.055}Mn_{0.045}Zr_{0.006}S_{0.012}O_{1.988}.
(3) The ternary polycrystalline positive electrode material obtained in step (2) was washed and dried to remove residual alkali on the surface, and then uniformly mixed with boric acid, where the ratio of the total molar amount of metal elements in the precursor to the molar amount of element boron was 1:0.01. The resulting mixture was subjected to heat-treatment at 300 °C for 8 h in an experimental furnace with an O₂ (with a purity of 99.99%) atmosphere, then cooled and sieved (using a 300-mesh sieve) to obtain a Li-B-O-coated ternary polycrystalline positive electrode material in this example, represented by the chemical formula Li_{1.04}Ni_{0.874}Co_{0.055}Mn_{0.045}Zr_{0.006}S_{0.012}B_{0.012}O_{2.018}. The liquid for washing was deionized water, the solid-to-liquid ratio for washing was 1.5, the washing lasted for 10 min, and the washing temperature was 20 °C. The drying temperature was 150 °C, and the drying lasted for 6 h.

### Example 2

The ternary polycrystalline positive electrode material in this example is represented by a chemical formula Li_{1.04}Ni_{0.878}Co_{0.055}Mn_{0.045}Mg_{0.012}S_{0.012}B_{0.01}O_{2.018}. The median particle size D50 of equivalent diameter distribution of its surface primary particles is 0.382 µm, the span of particle size distribution of the surface primary particles is 0.884, and the grain size of the ternary polycrystalline positive electrode material is 210 nm.

The ternary polycrystalline positive electrode material in this example was prepared by a method including the following steps:
(1) 0.012 mol of magnesium sulfate was added to a solvent and dispersed by stirring. 1 mol of a ternary precursor material (i.e., a nickel-cobalt-manganese hydroxide, where Ni:Co:Mn=90:5.5:4.5) was then added at a solid-to-liquid ratio (in unit of g/mL) of 1:0.25, and stirred for 10 min to obtain a slurry. The slurry was transferred into an oven and dried at 120 °C for 16 h to remove the solvent, yielding a modified precursor material.
(2) The modified precursor material and lithium hydroxide were mixed at an elemental molar ratio of 1:1.04 by using a dry mixing method, sintered at 770 °C for 11 h in a pure oxygen atmosphere after evenly mixed, and then cooled and sieved to obtain a ternary polycrystalline positive electrode material represented by a chemical formula Li_{1.04}Ni_{0.888}Co_{0.055}Mn_{0.045}Mg_{0.012}S_{0.012}O_{1.988}.
(3) The ternary polycrystalline positive electrode material obtained in step (2) was washed and dried to remove residual alkali on the surface, and then uniformly mixed with boric acid, where the ratio of the total molar amount of metal elements in the precursor to the molar amount of element boron was 1:0.01. The resulting mixture was subjected to heat-treatment at 300 °C for 8 h in an experimental furnace with an O₂ (with a purity of 99.99%) atmosphere, then cooled and sieved (using a 300-mesh sieve) to obtain a Li-B-O-coated ternary polycrystalline positive electrode material in this example, represented by the chemical formula Li_{1.04}Ni_{0.878}Co_{0.055}Mn_{0.045}Mg_{0.012}S_{0.012}B_{0.01}O_{2.018}. The liquid for washing was deionized water, the solid-to-liquid ratio for washing was 1.5, the washing lasted for 10 min, and the washing temperature was 20 °C. The drying temperature was 150 °C, and the drying lasted for 6 h.

### Example 3

The ternary polycrystalline positive electrode material in this example is represented by a chemical formula Li_{1.04}Ni_{0.878}Co_{0.067}Mn_{0.045}S_{0.012}B_{0.01}O_{2.018}. The median particle size D50 of equivalent diameter distribution of its surface primary particles is 0.374 µm, the span of particle size distribution of the surface primary particles is 0.891, and the grain size of the ternary polycrystalline positive electrode material is 208 nm.

The ternary polycrystalline positive electrode material in this example was prepared by a method including the following steps:
(1) 0.012 mol of cobaltous sulfate was added to a solvent and dispersed by stirring. 1 mol of a ternary precursor material (i.e., a nickel-cobalt-manganese hydroxide, where Ni:Co:Mn=90:5.5:4.5) was then added at a solid-to-liquid ratio of 1:0.25, and stirred for 10 min to obtain a slurry. The slurry was transferred into an oven and dried at 120 °C for 16 h to remove the solvent, yielding a modified precursor material.
(2) The modified precursor material and lithium hydroxide were mixed at an elemental molar ratio of 1:1.04 by using a dry mixing method, sintered at 770 °C for 11 h in a pure oxygen atmosphere after evenly mixed, and then cooled and sieved to obtain a ternary polycrystalline positive electrode material represented by a chemical formula Li_{1.04}Ni_{0.888}Co_{0.067}Mn_{0.045}S_{0.012}O_{1.988}.
(3) The ternary polycrystalline positive electrode material obtained in step (2) was washed and dried to remove residual alkali on the surface, and then uniformly mixed with boric acid, where the ratio of the total molar amount of metal elements in the precursor to the molar amount of element boron was 1:0.01. The resulting mixture was subjected to heat-treatment at 300 °C for 8 h in an experimental furnace with an O₂ (with a purity of 99.99%) atmosphere, then cooled and sieved (using a 300-mesh sieve) to obtain a Li-B-O-coated ternary polycrystalline positive electrode material in this example, represented by the chemical formula Li_{1.04}Ni_{0.878}Co_{0.067}Mn_{0.045}S_{0.012}B_{0.01}O_{2.018}. The liquid for washing was deionized water, the solid-to-liquid ratio for washing was 1.5, the washing lasted for 10 min, and the washing temperature was 20 °C. The drying temperature was 150 °C, and the drying lasted for 6 h.

### Comparative Example 1

The ternary polycrystalline positive electrode material in this comparative example is represented by a chemical formula Li_{1.04}Ni_{0.884}Co_{0.055}Mn_{0.045}Zr_{0.006}S_{0.036}B_{0.01}O_{1.994}. The median particle size D50 of equivalent diameter distribution of its surface primary particles is 0.285 µm, the span of particle size distribution of the surface primary particles is 0.876, and the grain size of the ternary polycrystalline positive electrode material is 198 nm.

The ternary polycrystalline positive electrode material in this comparative example was prepared by a method including the following steps:
(1) 0.036 mol of lithium sulfate was added to a solvent and dispersed by stirring. 1 mol of a ternary precursor material (i.e., a nickel-cobalt-manganese hydroxide, where Ni:Co:Mn=90:5.5:4.5) was then added at a solid-to-liquid ratio of 1:0.25, and stirred for 10 min to obtain a slurry. The slurry was transferred into an oven and dried at 120 °C for 16 h to remove the solvent, yielding a modified precursor material.
(2) The modified precursor material, lithium hydroxide, and zirconium oxide were mixed at an elemental molar ratio of 1:0.992:0.006 by using a dry mixing method, sintered at 775 °C for 11 h in a pure oxygen atmosphere after evenly mixed, and then cooled and sieved to obtain a ternary polycrystalline positive electrode material represented by a chemical formula Li_{1.04}Ni_{0.894}Co_{0.055}Mn_{0.045}Zr_{0.006}S_{0.036}O_{1.964}.
(3) The ternary polycrystalline positive electrode material obtained in step (2) was washed and dried to remove residual alkali on the surface, and then uniformly mixed with boric acid, where the ratio of the total molar amount of metal elements in the precursor to the molar amount of element boron was 1:0.01. The resulting mixture was subjected to heat-treatment at 300 °C for 8 h in an experimental furnace with an O₂ (with a purity of 99.99%) atmosphere, then cooled and sieved (using a 300-mesh sieve) to obtain a Li-B-O-coated ternary polycrystalline positive electrode material in this comparative example, represented by the chemical formula Li_{1.04}Ni_{0.884}Co_{0.055}Mn_{0.045}Zr_{0.006}S_{0.036}B_{0.01}O_{1.994}. The liquid for washing was deionized water, the solid-to-liquid ratio for washing was 1.5, the washing lasted for 10 min, and the washing temperature was 20 °C. The drying temperature was 150 °C, and the drying lasted for 6 h.

### Comparative Example 2

The ternary polycrystalline positive electrode material in this comparative example is represented by a chemical formula Li_{1.04}Ni_{0.884}Co_{0.055}Mn_{0.045}Zr_{0.006}S_{0.003}B_{0.01}O_{2.027}. The median particle size D50 of equivalent diameter distribution of its surface primary particles is 0.457 µm, the span of particle size distribution of the surface primary particles is 0.969, and the grain size of the ternary polycrystalline positive electrode material is 222 nm.

The ternary polycrystalline positive electrode material in this comparative example was prepared by a method including the following steps:
(1) 0.003 mol of lithium sulfate was added to a solvent and dispersed by stirring. 1 mol of a ternary precursor material (i.e., a nickel-cobalt-manganese hydroxide, where Ni:Co:Mn=90:5.5:4.5) was then added at a solid-to-liquid ratio of 1:0.25, and stirred for 10 min to obtain a slurry. The slurry was transferred into an oven and dried at 120 °C for 16 h to remove the solvent, yielding a modified precursor material.
(2) The modified precursor material, lithium hydroxide, and zirconium oxide were mixed at an elemental molar ratio of 1:1.034:0.006 by using a dry mixing method, sintered at 770 °C for 11 h in a pure oxygen atmosphere after evenly mixed, and then cooled and sieved to obtain a ternary polycrystalline positive electrode material represented by a chemical formula Li_{1.04}Ni_{0.894}Co_{0.05}Mn_{0.045}Zr_{0.006}S_{0.003}O_{1.997}.
(3) The ternary polycrystalline positive electrode material obtained in step (2) was washed and dried to remove residual alkali on the surface, and then uniformly mixed with boric acid, where the ratio of the total molar amount of metal elements in the precursor to the molar amount of element boron was 1:0.01. The resulting mixture was subjected to heat-treatment at 300 °C for 8 h in an experimental furnace with an O₂ (with a purity of 99.99%) atmosphere, then cooled and sieved (using a 300-mesh sieve) to obtain a Li-B-O-coated ternary polycrystalline positive electrode material in this comparative example, represented by the chemical formula Li_{1.04}Ni_{0.884}Co_{0.055}Mn_{0.045}Zr_{0.006}S_{0.003}B_{0.01}O_{2.027}. The liquid for washing was deionized water, the solid-to-liquid ratio for washing was 1.5, the washing lasted for 10 min, and the washing temperature was 20 °C. The drying temperature was 150 °C, and the drying lasted for 6 h.

### Comparative Example 3

The ternary polycrystalline positive electrode material in this comparative example is represented by a chemical formula Li_{1.04}Ni_{0.884}Co_{0.055}Mn_{0.045}Zr_{0.006}B_{0.01}O_{2.03}. The median particle size D50 of equivalent diameter distribution of its surface primary particles is 0.388 µm, the span of particle size distribution of the surface primary particles is 0.921, and the grain size of the ternary polycrystalline positive electrode material is 107 nm.

The ternary polycrystalline positive electrode material in this comparative example was prepared by a method including the following steps:
(1) A ternary precursor material (i.e., a nickel-cobalt-manganese hydroxide, with Ni:Co:Mn=90:5.5:4.5), lithium hydroxide, and zirconium oxide were mixed at an elemental molar ratio of 1:1.04:0.006 by using a dry mixing method, sintered at 725 °C for 11 h in a pure oxygen atmosphere after evenly mixed, and then cooled and sieved to obtain a ternary polycrystalline positive electrode material represented by a chemical formula Li_{1.04}Ni_{0.894}Co_{0.055}Mn_{0.045}Zi_{0.006}O₂.
(2) The ternary polycrystalline positive electrode material obtained in step (2) was washed and dried to remove residual alkali on the surface, and then uniformly mixed with boric acid, where the ratio of the total molar amount of metal elements in the precursor to the molar amount of element boron was 1:0.01. The resulting mixture was subjected to heat-treatment at 300 °C for 8 h in an experimental furnace with an O₂ (with a purity of 99.99%) atmosphere, then cooled and sieved (using a 300-mesh sieve) to obtain a Li-B-O-coated ternary polycrystalline positive electrode material in this comparative example, represented by the chemical formula Li_{1.04}Ni_{0.884}Co_{0.055}Mn_{0.045}Zr_{0.006}B_{0.01}O_{2.03}. The liquid for washing was deionized water, the solid-to-liquid ratio for washing was 1.5, the washing lasted for 10 min, and the washing temperature was 20 °C. The drying temperature was 150 °C, and the drying lasted for 6 h.

The equivalent diameters of the surface primary particles of the ternary polycrystalline positive electrode materials from the examples and comparative examples were determined using the following method: FE-SEM testing was conducted (test conditions: FE-SEM, model JSM-7900F, probe type ETD, secondary electron imaging mode, spot size 3.0, electron beam acceleration voltage 5.00 kV, and magnification 30,000x). The primary particles in the FE-SEM images were identified to recognize individual particles. The area of the surface primary particles of the polycrystalline materials was calculated based on the number of pixels, and the equivalent circle diameter was output as the result. The span of particle size distribution was calculated by span=(D90-D10)/D50.

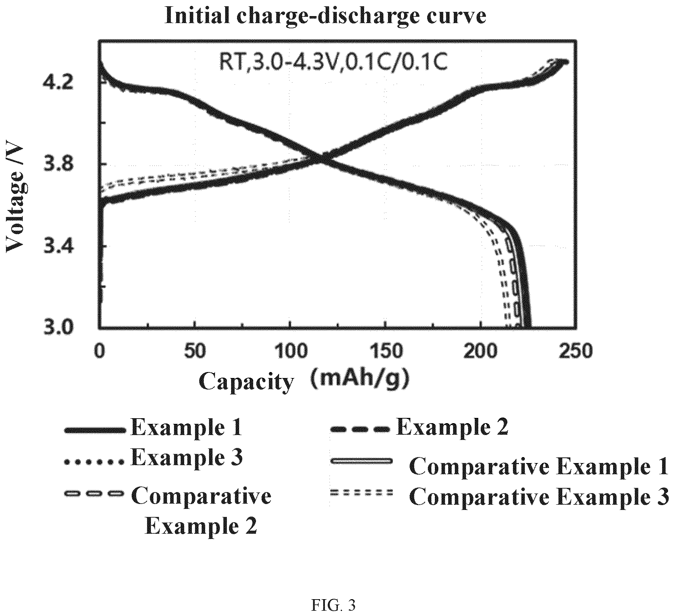

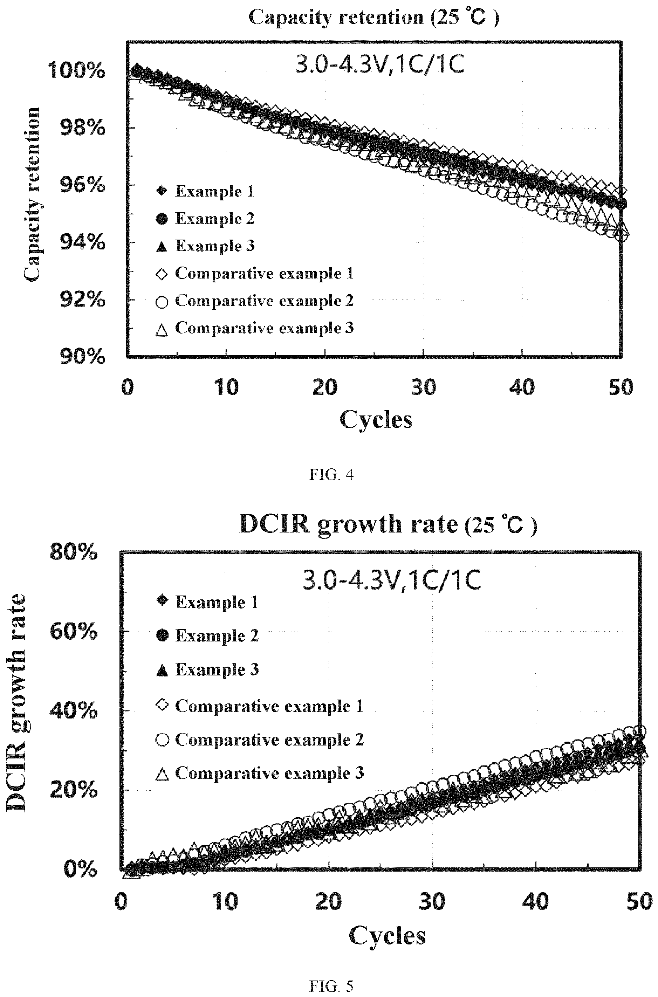

The electrochemical performance of the ternary polycrystalline positive electrode materials from the examples and comparative examples was tested in CR2032 coin cells. The test results are shown in Table 1. The initial charge-discharge curves of the examples and comparative examples are shown in FIG. 3. The charge-discharge cycling performance of the examples and comparative examples are shown in FIG. 4. The DCR growth curves of the examples and comparative examples during charge-discharge cycling are shown in FIG. 5. The test method was as follows:

The ternary polycrystalline positive electrode material, conductive carbon black (SP), and polyvinylidene fluoride (PVDF) in a mass ratio of 92.5:5:2.5 were added to a solvent NMP and dispersed by stirring. The resulting mixture was coated on an aluminum foil substrate, and then roll-pressed to obtain a positive electrode plate. The negative electrode plate was lithium metal sheet. The electrolyte solution was 1 mol/L of LiPF₆ in a solvent mixture of EC and DMC in a ratio of 1:2, with 1% VC as an additive. The above components were assembled into a CR2032 coin cell for battery testing with a charge cut-off voltage of 4.25V and a discharge cut-off voltage of 3.0V.

**Table 1. Performance test results of the ternary polycrystalline positive electrode materials from the examples and comparative examples**

| | 0.1C initial discharge specific capacity at a voltage of 3.0 V to 4.3 V (mAh/g) | Initial coulombic efficiency (%) | 25 °C capacity retention after 50 cycles (%) | 25 °C DCR growth rate after 50 cycles (%) | Grain size (nm) | D50 of surface primary particles | Span of surface primary particles |
|---|---|---|---|---|---|---|---|
| Example 1 | 225.3 | 92.0 | 95.2 | 35 | 214 | 0.381 | 0.916 |
| Example 2 | 224.1 | 91.6 | 95.3 | 31 | 210 | 0.382 | 0.884 |
| Example 3 | 224.6 | 91.9 | 95.3 | 33 | 208 | 0.374 | 0.891 |
| Comparative Example 1 | 222.2 | 91.5 | 95.6 | 28 | 198 | 0.285 | 0.876 |
| Comparative Example 2 | 219.5 | 90.0 | 94.1 | 36 | 222 | 0.457 | 0.969 |
| Comparative Example 3 | 214.5 | 88.0 | 94.4 | 31 | 107 | 0.388 | 0.921 |

According to the test results, for Examples 1 to 3, the molar ratios of the materials are all within reasonable ranges, the D50 of the surface primary particles is in an appropriate range from 0.29 µm to 0.45 µm, and the span of particle size distribution of the primary particles is also in an appropriate range from 0.76 to 0.96, exhibiting relatively high discharge specific capacity and cycling stability. Particularly, as the D50 of the surface primary particles is in a preferred range from 0.30 µm to 0.40 µm, the span of the surface primary particles is in a preferred range from 0.81 µm to 0.94 µm, and the grain size is in a range from 120 nm to 350 nm, the positive electrode materials in Examples 1 to 3 demonstrate relatively high initial efficiency, discharge capacity, and superior 25°C capacity retention.

From the test results, it can be seen that the D50 values of the primary particles in Examples 1 to 3 are relatively close, indicating that element S (element M3) can influence the formation energy of the primary particles during the first sintering process, ultimately refining the primary particles and enabling their ordered distribution (as shown in FIG. 1). The smaller surface primary particles result in a more ordered arrangement of the primary particles and a denser surface, reducing the migration distance of lithium ions in the particles, thereby improving the initial coulombic efficiency and increasing the discharge capacity (as shown in FIG. 3).

From the test results, it also can be seen that the span values of the primary particles in Examples 1 to 3 are relatively close, indicating that element S (M3) contributes to a more uniform and ordered size distribution of the surface primary particles. This characteristic of uniform and ordered distribution of the surface primary particles can effectively mitigate stress concentration and crack formation caused by volume expansion of the grains during cycling, thereby reducing side reactions between the electrolyte and particle cracks, improving cycling efficiency, and correspondingly lowering the DCR growth rate (as shown in FIGS. 4 and 5).

According to the test results of Comparative Examples 1 and 2, either too small or too large D50 of the surface primary particles can reduce discharge capacity or cycling performance. Comparative Example 3 shows that without doping with element S (element M3), and relying solely on temperature control to achieve the D50 of the surface primary particles comparable to that in Example 1, the sintering temperature has to be lowered, resulting in excessively small grain sizes, meaning incomplete crystal growth, which reduces the capacity of the obtained product.

The above-described embodiments are some preferred embodiments of the present application, and the protection scope of the present application is not limited to the afore-mentioned examples. For those skilled in the art, any improvements and modifications obtained without departing from the technical concept of the present application should also be considered within the protection scope of the present application.

## Claims

1. A ternary polycrystalline positive electrode material represented by a chemical formula LiₐNi_{b}Co_{c}M1_{d}M2ₑM3_{f}O_{g}, wherein M1 comprises at least one element selected from the group consisting of Mn and Al, M2 comprises at least one element selected from the group consisting of B, Zr, Sr, W, Nb, Ti, Mo, Ce, and Mg, M3 comprises at least one element selected from the group consisting of F, S, and Cl; 0.97≤a≤1.10, 0.300≤b≤0.995, 0.005≤c≤0.300, 0.005≤d≤0.300, 0≤e≤0.030, 0.0001≤f≤0.300, and 1.800≤g≤2.200.

2. The ternary polycrystalline positive electrode material according to claim 1, wherein a median particle size D50 of equivalent diameter distribution of surface primary particles of the ternary polycrystalline positive electrode material is in a range from 0.29 µm to 0.45 µm.

3. The ternary polycrystalline positive electrode material according to claim 1, wherein a grain size of the ternary polycrystalline positive electrode material is in a range from 120 nm to 350 nm.

4. The ternary polycrystalline positive electrode material according to any one of claims 1 to 3, wherein a span of particle size distribution of the surface primary particles of the ternary polycrystalline positive electrode material is in a range from 0.76 to 0.96.

5. A method for preparing the ternary polycrystalline positive electrode material according to any one of claims 1 to 4, comprising following steps:
(1) dissolving an element M3-containing compound to obtain an M3 solution, evenly mixing a ternary precursor material containing Ni, Co, and M1 with the M3 solution at a solid-to-liquid ratio of 1:(0.2 to 0.3) to form a slurry, and drying the slurry to obtain a modified ternary precursor material;
(2) mixing the modified ternary precursor material with a lithium source and sintering to obtain an intermediate product; and
(3) washing the intermediate product, then mixing with a coating agent, and sintering to obtain the ternary polycrystalline positive electrode material.

6. The method according to claim 5, wherein the coating agent is an element M2-containing compound.

7. The method according to claim 5, wherein the sintering in step (2) is conducted at a temperature in a range from 650 °C to 800 °C for a sintering time period in a range from 8 hours to 12 hours.

8. The method according to claim 5, wherein the washing in step (3) is performed at a solid-to-liquid ratio of (1 to 5):1, at a temperature in a range from 4 °C to 40 °C, for a time period in a range from 1 minute to 30 minutes.

9. The method according to claim 5, wherein the sintering in step (3) is conducted at a temperature in a range from 240 °C to 440 °C for a time period in a range from 3 hours to 14 hours.

10. The method according to any one of claims 5 to 9, wherein the lithium source comprises at least one compound selected from the group consisting of lithium carbonate, lithium hydroxide, and lithium oxide;
the element M3-containing compound comprises at least one compound selected from the group consisting of lithium sulfate, zirconium sulfate, cerium sulfate, strontium sulfate, aluminum sulfate, cobalt sulfate, nickel sulfate, manganese sulfate, magnesium sulfate, cobaltous sulfate, calcium sulfate, and barium sulfate.
